**Europäisches Patentamt**

**European Patent Office**

**Office européen des brevets**

(19)

(11) Veröffentlichungsnummer : **0 363 711 B1**

(12)

# EUROPÄISCHE PATENTSCHRIFT

(45) Veröffentlichungstag der Patentschrift :
**28.10.92 Patentblatt 92/44**

(51) Int. Cl.$^5$ : **C04B 35/56**

(21) Anmeldenummer : **89117619.0**

(22) Anmeldetag : **23.09.89**

(54) **Siliciumcarbid-Pulver, Verfahren zu seiner Herstellung sowie dessen Verwendung.**

(30) Priorität : **08.10.88 DE 3834325**

(43) Veröffentlichungstag der Anmeldung :
**18.04.90 Patentblatt 90/16**

(45) Bekanntmachung des Hinweises auf die
Patenterteilung :
**28.10.92 Patentblatt 92/44**

(84) Benannte Vertragsstaaten :
**DE FR GB IT SE**

(56) Entgegenhaltungen :
**EP-A- 0 110 053**
**EP-A- 0 266 641**
**DE-A- 3 630 369**
**GB-A- 2 011 879**
**US-A- 4 004 934**
**US-A- 4 108 929**
**US-A- 4 295 890**

(73) Patentinhaber : **BAYER AG**
**W-5090 Leverkusen 1 Bayerwerk (DE)**
Patentinhaber : **Max-Planck-Gesellschaft zur**
**Förderung der Wissenschaften e.V.**
**Bunsenstrasse 10**
**W-3400 Göttingen (DE)**

(72) Erfinder : **Riedel, Ralf, Dr.**
**Kasparswaldstrasse 21**
**W-7022 Leinfelden-Echterdingen 3 (DE)**
Erfinder : **Passing, Gerd, Dipl.-Ing.**
**Tannenweg 7/1**
**W-7016 Gerlingen (DE)**
Erfinder : **Petzow, Günter, Prof. Dr.**
**Tannenweg 7**
**W-7022 Leinfelden-Echterdingen 1 (DE)**
Erfinder : **Krumbe, Wolfgang, Dr.**
**Breslauer Strasse 31**
**W-4150 Krefeld (DE)**
Erfinder : **Franz, Gerhard, Dr.**
**Erich-Klausener-Strasse 44**
**W-4150 Krefeld (DE)**

## Beschreibung

Die vorliegende Erfindung betrifft ein für die Herstellung von SiC-Sinterkeramik geeignetes SiC-Pulver mit oberflächlich aufgetragenen Verbindungen, wobei die Verbindungen Bornitrid und Kohlenstoff sind, Verfahren zur Herstellung der SiC-Pulver sowie die Verwendung dieser Pulver zur Herstellung von SiC-Sinterformkörpern.

SiC wird üblicherweise unter Zusatz von Kohlenstoff, bor- und aluminiumhaltigen Verbindungen unter Anwendung von Druck oder drucklos bei 1900 bis 2300°C gesintert (US-A 4 295 890, US-A 4 004 934).

Als Zusätze werden dabei Al oder $Al_2O_3$, $Al_4C_3$, AlN bzw. B, $B_2O_3$, $B_4C$, BN oder BP jeweils zusammen mit elementarem Kohlenstoff (Graphit) verwendet. Die homogene Verteilung dieser Feststoffe mit SiC bereitet jedoch Schwierigkeiten und bedarf aufwendiger Mahlprozesse. Deshalb werden allgemein Verfahren gesucht, wonach die Sinterhilfsmittel homogen abgeschieden werden können.

Ein solches Verfahren ist aus der DE-C 2 856 593 bekannt. Hiernach wird die Bor-Komponente als Boroxid oder Borsäure und der Kohlenstoff in Form von Kunstharzen auf SiC-Matrix-Pulver aus einer methanolischen Lösung eingetragen.

Aus "Journal of the Ceramic Society of Japan" 96 [2] (1988) 211 - 216 geht die Abscheidung von in Aceton gelöstem Carboran, $B_{10}H_{12}C_2$, auf SiC-Pulver hervor. Das Carboran wird anschließend durch Pyrolyse zu Borcarbid umgewandelt. Wegen seiner aufwendig darstellbaren Ausgangskomponenten ist dieses Verfahren jedoch unwirtschaftlich. Nachteilig wirkt sich außerdem aus, daß der im Carboran anteilige Kohlenstoff nach der Zersetzung zum Sintern von SiC-Pulver nicht ausreicht und zusätzlich Kohlenstoff benötigt wird, der wie zuvor beschrieben, über Kunstharze eingebracht wird.

In der DE-A 36 30 369 wird ein SiC-Sinterkörper und das Verfahren zu seiner Herstellung beschrieben. Als Sinterhilfsmittel werden ebenfalls Carborane und Sauerstofffänger (z.B. Novolak-Harz) aus einem organischen Lösungsmittel auf SiC-Pulver abgeschieden.

Aus dem getrockneten Pulver wird ein Formkörper gefertigt, der einem aufwendigen und langwierigen Aufheiz- und Sinterzyklus unterworfen wird. Trotz der langsamen Ausgasung der Zersetzungsprodukte aus Carboran und Sauerstofffänger kann es zur unerwünschten Bildung von Rissen, Ausgasungskanälen und Poren im Formling kommen.

Wegen der Hydrolyseempfindlichkeit der auf der SiC-Teilchenoberfläche abgeschiedenen Carborane ist eine Weiterverarbeitung der Pulver nur in Schutzgasatmosphäre möglich.

In der DE-C 2 856 593 wird ein Verfahren erwähnt, gemäß dem eine feinst verteilte Mischung aus Siliciumdioxid und Kohlenstoff durch Hydrolyse eines Siliciumdioxidgels in einer Zuckerlösung hergestellt wird. Es handelt sich um einen aufwendigen Hydrolyseprozeß, wobei Wasser in einem langwierigen Destillationsschritt entfernt werden muß. Beim Erhitzen in einer inerten Atmosphäre wird schließlich SiC gebildet. Durch Einlagerung von Borsäure in das Siliciumdioxidgel kann ein Gemisch aus SiC und $B_4C$ erzeugt werden.

Aufgabe der vorliegenden Erfindung ist es nun, ein für die Herstellung von SiC-Sinterkeramik geeignetes SiC-Pulver zur Verfügung zu stellen, welches die Nachteile des Standes der Technik nicht aufweist.

Überraschenderweise wurde nun gefunden, daß diese Anforderungen in hervorragender Weise erfüllt werden durch ein für die Herstellung von SiC-Sinterkeramik geeignetes SiC-Pulver mit oberflächlich aufgetragenen Verbindungen, wobei die Verbindungen Bornitrid und Kohlenstoff sind und als homogene Beschichtung auf der Oberfläche der SiC-Einzelteilchen vorliegen.

Dieses SiC-Pulver ist Gegenstand dieser Erfindung.

Unabhängig davon, ob die erfindungsgemäßen als Schicht auf dem SiC-Pulver vorliegenden Verbindungen teilweise oder vollständig pyrolisiert vorliegen, wird immer eine homogene Beschichtung angestrebt werden. Die Verbindungen Bornitrid und Kohlenstoff liegen auf der Oberfläche der Einzelteilchen des SiC-Pulvers als homogene Schicht vor. Hierbei wird natürlich eine Beschichtung angestrebt, die so deckend wie möglich ist. Bevorzugt beträgt die Dicke der homogenen Schicht 0,5 bis 40 nm, besonders bevorzugt 0,5 bis 15 nm.

In einer bevorzugten Ausführungsform weist das erfindungsgemäße SiC-Pulver einen Gehalt an Bor von 0,1 bis 4 Gew.-%, an Stickstoff von 0,1 bis 4 Gew.-% und an freiem Kohlenstoff von 0,5 bis 5 Gew.-% auf. Besonders bevorzugt ist ein Gehalt an Bor von 0,1 bis 1 Gew.-%, an Stickstoff von 0,1 bis 1 Gew.-% und an freiem Kohlenstoff von 0,5 bis 4 Gew.-%.

Die Güte der Oberflächenbelegung des erfindungsgemäßen SiC-Pulvers mit Bornitrid und Kohlenstoff kann durch Tiefenprofiluntersuchungen mit der Sekundärionenmassenspektrometrie (SIMS) bestimmt werden.

Für die SIMS-Untersuchungen der SiC-Pulver wurden folgende Meßparameter gewählt: Primärionen $Ar^+$ (Argonkathode), 10 keV (Kiloelektronenvolt), Strom $3,6 \times 10^{-8}$ A (Ampere), Strahldurchmesser 0,75 mm, Abmischung der SiC-Pulver mit reinem Silverpulver im Verhältnis 1 : 4 um eine Aufladung der Pulveroberfläche zu verhindern.

Für den Fall, daß in einem dotierten SiC-Pulver nach dem Stand der Technik die Bor, Stickstoff und Kohlenstoff enthaltenden Additive neben den SiC-Teilchen vorliegen, werden während der SIMS-Messung die charakteristischen Ionen des Bor und Silicium unabhängig vom zeitlichen Verlauf der Messung mit gleichbleibender Intensität auftreten.

Liegt eine Beschichtung der SiC-Teilchen mit dem borhaltigen Additiv vor, so nimmt die Intensität des Borsignals aufgrund der abtragenden Wirkung der Argonionen ab, gleichzeitig jedoch die Intensität des Si-Signals durch Freilegung der SiC-Schichten zu bis sich bei obiger Einstellung nach einer Zeit von ca. 40 bis 60 Minuten ein Gleichgewichtswert einstellt.

Für eine quantitative Aussage läßt sich ein Eichgemisch aus SiC-Pulver mit bekannter Menge an Bornitrid und Kohlenstoff verwenden, an dem die Ionenintensitäten von Bor und Silicium gemessen werden und aufgrund der bekannten Stöchiometrie in die Konzentration von BN und SiC umgerechnet werden.

Das SiC-Pulver ist dann erfindungsgemäß mit den Verbindungen Bornitrid und Kohlenstoff belegt, wenn der Anreicherungsfaktor K, der in DE-A 3 637 506 am Beispiel von $Si_3N_4$-Pulver definiert ist, einen Wert größer als vier annimmt.

Der Oberflächenanreichungsfaktor K wird hier wie folgt definiert:

$$K = \frac{\dfrac{\text{BN-Konzentration}}{\text{SiC-Konzentration}} \text{ der Probe bei } t = 0 \quad (= \text{Kornoberfläche})}{\dfrac{\text{BN-Konzentration}}{\text{SiC-Konzentration}} \text{ der Probe bei } t = 60 \text{ min} \quad (= \text{Korninnerem})}$$

Der Oberflächenanreichungsfaktor nimmt den Wert eins an, wenn keine Beschichtung des SiC-Materials vorliegt und das Verhältnis der Konzentrationen zu Beginn des Ionenbeschusses (t = 0) und nach einer längeren Zeit (t = 60 min) gleichbleibt. Jeder Faktor K größer als eins bedeutet eine Anreicherung des Additivs auf der Oberfläche. Der Faktor ist im wesentlichen abhängig von der Menge des Additivs (Dicke der Anreicherungsschicht) und der Eindringtiefe des Ionenstrahls (Abtragungsrate des Strahls).

Die SiC-Pulver mit einem Oberflächenanreicherungsfaktor K größer als 4 weisen zur Verbesserung der Sintereigenschaften eine ausreichende Beschichtung mit Bor, Stickstoff und Kohlenstoff enthaltenden Additiven auf.

Das erfindungsgemäße SiC-Pulver ist dadurch erhältlich, daß SiC-Pulver mit einer Beschichtung von thermisch zu Bornitrid und Kohlenstoff zersetzbaren Verbindungen in einer thermischen Behandlung bei 100 bis 1200°C pyrolisiert wird. Dies kann unter inerten Bedingungen, vorzugsweise in Argonatmosphäre, oder um eine beschleunigte Ausgasung der zersetzbaren Verbindung zu erzeugen bei Niederdruck vorgenommen werden.

In einer bevorzugten Ausführungsform handelt es sich bei den zu Bornitrid und Kohlenstoff zersetzbaren Verbindungen um ein Addukt oder Addukte aus einer borhaltigen Lewissäure mit einem aromatischen oder aliphatischen Amin oder einem stickstoffhaltigen Aromaten.

Bevorzugt wird hierbei ein Addukt oder Addukte von Boran mit Methyl-, Dimethyl-, Trimethyl-, Ethyl-, Diethyl-, Triethylamin oder Piperidin. Die Amin-Boran-Addukte sind leicht zugängliche Substanzen und lassen sich mit sehr guten Ausbeuten beispielsweise in einer Eintopfreaktion durch Umsetzung von Alkaliboranaten mit primären, sekundären und tertiären Aminen in Gegenwart von elementarem Schwefel herstellen (Z. Naturforsch. 32 b, (1983) 203 - 207). Zahlreiche Amin-Borane sind auch kommerziell erhältlich.

Besonders bevorzugt ist dabei die Verbindung Pyridin-Boran, $BH_3 \times C_5H_5N$.

Besonders gute SiC-Pulver liegen dann vor, wenn die zersetzbaren Verbindungen derartig geschaffen sind, daß der Thermolyserückstand der Verbindungen bei mehr als 25 %, bevorzugt über 45 %, liegt.

Ebenso sollte ein molares Bor- zu Stickstoff-Verhältnis von 0,8 bis 1,2 angestrebt werden.

Gegenstand dieser Erfindung ist auch ein Verfahren zur Herstellung der erfindungsgemäßen SiC-Pulver, wobei die zersetzbaren Verbindungen in einer Suspension von SiC mit einem organischen, aus Kohlenwasserstoff oder Chlorkohlenwasserstoff bestehenden Lösungsmittel, bevorzugt Diethylether, Benzol, Toluol, Diglycoldimethylether, Dioxan, Methylenchlorid oder Tetrahydrofuran, gelöst, das Lösungsmittel im Vakuum oder bei Normaldruck unter Inertgas entfernt und der Rückstand thermisch zu Bornitrid und Kohlenstoff zersetzt wird.

Um eine homogene Verteilung der molekularen Verbindungen auf der Pulveroberfläche zu erreichen, wird die Menge der erfindungsgemäßen Bor, Kohlenstoff und Stickstoff enthaltenden Verbindung so gewählt, daß die gesamte Oberfläche der einzelnen SiC-Teilchen mindestens monolagig beschichtet wird und nach der thermischen Zersetzung der Verbindung eine Belegung mit Bornitrid und Kohlenstoff auf der Oberfläche der Einzelteilchen erzeugt wird, wobei Bor in Mengen von 0,1 bis 4 Gew.-%, Stickstoff in Mengen von 0,1 bis 4 Gew.-% und Kohlenstoff in Mengen von 0,5 bis 5 Gew.-% verbleibt.

Da beispielsweise Pyridin-Boran bei Zimmertemperatur flüssig ist, kann das SiC-Pulver zum einen mit dieser Flüssigkeit getränkt werden oder zum anderen in einer Pyridin-Boran-Lösung suspendiert werden. Die Dispergierung erfolgt durch mechanisches Rühren des SiC-Pulvers in der genannten Lösung mit anschließender Ultraschallbehandlung.

Vorteilhaft wird ein Verfahren zur Herstellung des erfindungsgemäßen SiC-Pulvers angewendet, wonach die Boran-Verbindung in einem organischen, aus Kohlenwasserstoff oder Chlorkohlenwasserstoff bestehenden Lösungsmittel gelöst wird wie Diethylether, Benzol, Toluol, Diglycoldimethylether, Dioxan, Methylenchlorid oder Tetrahydrofuran.

Die Oberflächenbelegung z. B. des Pyridin-Borans aus der Lösung erfolgt durch Abdampfen des Lösungsmittels durch Destillation bei Normaldruck oder vermindertem Druck unter gleichzeitiger Bewegung des Feststoffs unter Inertgas und Isolierung des Rückstands. Bevorzugt wird das Abdampfen des Lösungsmittels durch Sprühtrocknung oder Gefriertrocknung vorgenommen. Selbstverständlich lassen sich auch andere gängige Methoden zum Entfernen des Lösungsmittels anwenden, wie z. B. Einleiten von Inertgas oder Spinflashtrocknung.

Als keramisches Ausgangsmaterial für die Herstellung des erfindungsgemäßen SiC-Pulvers wird feingemahlenes SiC-Pulver eingesetzt, welches sowohl in der alpha- oder beta-Phase vorliegen oder amorph sein kann. Das erfindungsgemäße SiC-Pulver wird erzeugt, indem die monomere Boran-Verbindung auf der SiC-Pulveroberfläche abgeschieden wird, das dotierte SiC-Pulver gesiebt wird und durch Tempern bei 100 - 200°C das Boran-Addukt zunächst polymerisiert und schließlich nach Temperaturerhöhung in einer gesamten Temperzeit von 0,2 bis 10 Stunden in inerter Atmosphäre bei 100°C bis 1200°C in Bornitrid und Kohlenstoff umgesetzt wird.

Gemäß dem oben beschriebenen Verfahren zur Herstellung des erfindungsgemäßen SiC-Pulvers wird durch die Thermolyse die Rieselfähigkeit und Feinkörnigkeit des SiC-Pulvers nicht beeinträchtigt, und man erhält so ein mit Bornitrid und Kohlenstoff dotiertes, feinkörniges Pulver.

Gegenstand der Erfindung ist auch die Verwendung der erfindungsgemäßen SiC-Pulver, die nach dem erfindungsgemäßen Verfahren dargestellt werden, zur Herstellung von SiC-Sinterformkörpern.

Die Herstellung des Sinterformkörpers erfolgt in bekannter Weise durch Formgebung und Verdichtung, anschließende Trocknung oder Entwachsung des Grünkörpers sowie Sinterung bei 1600 bis 2300°C in inerter Atmosphäre.

Bei Verwendung des erfindungsgemäßen SiC-Pulvers zur Herstellung eines SiC-Sinterformkörpers dienen Verfahren wie Schlickergießen in nichtwäßrigen Lösungsmitteln oder Spritzgießen mit anschließender Trocknung oder Entwachsung des Grünkörpers. Vorteilhaft wirkt sich die stark anhaftende Schicht des erfindungsgemäßen Pulvers von Bornitrid und Kohlenstoff auf den SiC-Einzelteilchen aus, die auch unter der Einwirkung von organischen Lösungsmitteln erhalten bleibt und somit eine homogene Verteilung der Sinterhilfe im Grünling gewährleistet.

Beim anschließenden Verdichten der Formkörper durch die üblichen Sintermethoden wie Heißpressen, heißisostatisches Pressen oder druckloses Sintern unter Vakuum oder inerter Atmosphäre bei 1600 - 2300°C wird lediglich CO bei der Desoxidation der im SiC vorliegenden $SiO_2$-Schicht freigesetzt. Weitere Entgasungsprodukte aus dem erfindungsgemäßen SiC-Pulver treten nicht auf, so daß eine verstärkte Riß-, Kanal- oder Porenbildung ausgeschlossen werden kann. Beim drucklosen Sintern lassen sich SiC-Sinterkörper mit Dichten größer 95 % des theoretischen Wertes herstellen.

Ein wesentlicher Vorteil bei Verwendung des erfindungsgemäßen SiC-Pulvers besteht darin, daß aufgrund der homogenen und oberflächlichen Beschichtung der SiC-Teilchen mit Bornitrid und Kohlenstoff das Kornwachstum trotz hoher Sintertemperaturen stark reduziert ist und daher im Gefüge eine extrem enge Korngrößenverteilung mit mittleren Korngrößen kleiner 2 μm und maximalen Korndurchmessern kleiner 5 μm gemessen wird. Zudem wird das für SiC charakteristische elongierte Kornwachstum unterdrückt.

Im Vergleich dazu zeigen SiC-Pulver, die konventionell mit bor- und kohlenstoffhaltigen Sinterhilfsmitteln aufbereitet wurden, während des Sinters zum einen eine bedeutend schlechtere Verdichtung und zum anderen ein ausgeprägteres Kornwachstum. Das Gefüge weist hier eine breitere Korngrößenverteilung mit mittleren Korndurchmessern größer 3 μm und maximalen Korngrößen bis zum 40-50 μm auf.

Im folgenden wird die Erfindung beispielhaft erläutert, ohne daß hierin eine Einschränkung zu sehen ist.

Beispiel 1

In einem Quarz-Kolben mit Hahn werden 1,6 g (1,74 ml) Pyridin-Boran, $BH_3 \times C_5H_5N$, unter stehendem Argon bei 108°C 100 min getempert. Es entsteht ein transparenter und orangefarbener Feststoff. Dieser wird bis auf 1000°C mit einer Aufheizrate von 5 K/min erhitzt, wobei ein silbrigglänzender und schaumiger Rückstand verbleibt.

TGA/DTG-Messungen ergeben eine maximale Zersetzungsrate bei 425°C. Das röntgenamorphe Pyrolysat entsteht mit 53 gew.-%iger Ausbeute (bezogen auf eingesetztes Pyridin-Boran) und zeigt folgende elementaranalytische Zusammensetzung: C (62 Gew.-%), B (17,5 Gew.-%), N (17,8 Gew.-%), O (0.78 Gew.-%). Das IR-Spektrum des Pyrolysats enthält zwei intensive Absorptionsbanden bei 1382 und 818 cm$^{-1}$, die den Schwingungsfrequenzen von BN (1370 und 818 Cm$^{-1}$, BN A01, Handelsprodukt HC Starck, Berlin) zugeordnet werden können.

Beispiel 2

In einem Einhalskolben mit Hahn werden unter Argon-Schutzgas 98 g SiC mit 500 ml über Na/K-Legierung getrocknetem Tetrahydrofuran (THF) aufgeschlämmt. Danach erfolgt Zugabe von 6 g (6,5 ml) Pyridin-Boran-Komplex. Zur besseren Dispergierung der SiC-Suspension wird der verschlossene Kolben 20 min mit Ultraschall behandelt und anschließend 18 h unter Argon gerührt. Beim Abdestillieren des THF bei 0°C und 10$^{-1}$ mbar erfolgt die homogene Abscheidung des Pyridin-Borans auf die SiC-Pulverteilchen.

Das auf diese Weise dotierte und getrocknete Pulver wird unter Argonschutzgas gesiebt (Maschenweite d = 140 μm) und in einem Quarz-Kolben wie in Beispiel 1 beschrieben 100 min lang bei 108°C getempert.

Man erhält ein SiC-Pulver folgender Zusammensetzung:

Si = 65,1 Gew.-%; C = 30 Gew.-%; B = 0,55 Gew.-%; N = 0,66 Gew.-%; O = 0,89 Gew.-%.

Das molare B/N-Verhältnis ergibt sich zu 1,08.

Das vorpyrolisierte Pulver wird anschließend analog Beispiel 1 mit einer Aufheizrate von 5 K/min auf 1000°C erhitzt und 15 min bei dieser Temperatur gehalten.

Die chemische Analyse des Thermolyserückstands ergibt einen Siliciumgehalt von 65,7 Gew.-%, Kohlenstoffgehalt von 31 Gew.-%, Borgehalt 0,44 Gew.-%, Stickstoffgehalt von 0,60 Gew.-% und Sauerstoffgehalt von 1,0 Gew.-%. Das Pulver zeichnet sich durch ein molares B/N-Verhältnis von 0,95 und einen überschüssigen Kohlenstoffgehalt von 2,85 Gew.-% aus.

Beispiel 3

SiC-Pulver (96,9 %), BN-Pulver (1,1 %) und Flammruß (2,0 %) wurden durch Mischen und Scheibenschwingmahlung homogenisiert.

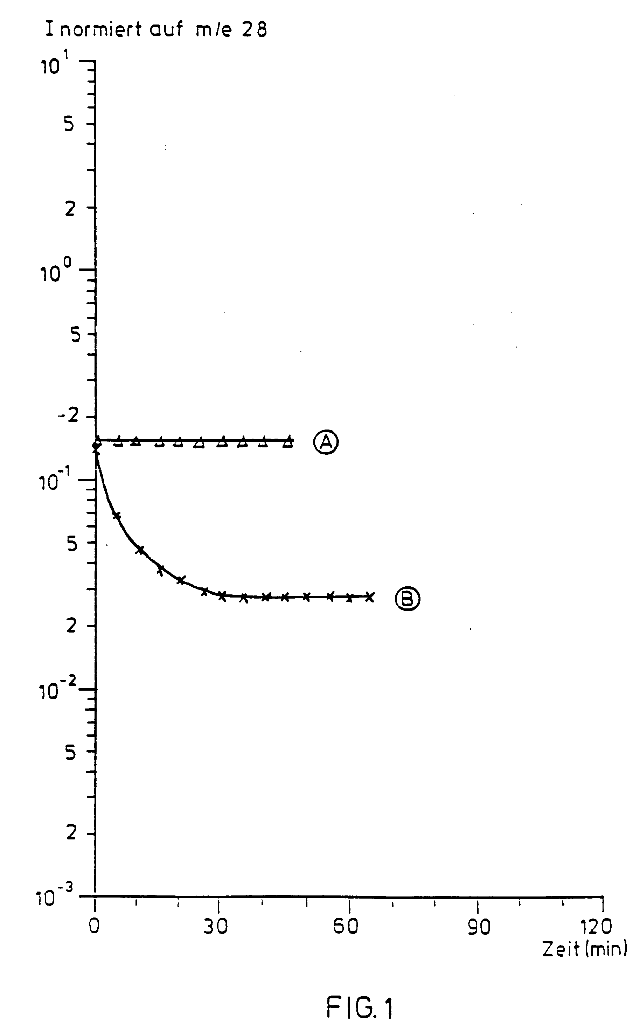

0,25 g des Gemisches wurden mit 0,75 g Silber-Pulver versetzt, erneut homogenisiert und daran Tiefenprofilmessungen mit SIMS vorgenommen. (Meßparameter: Primärionen Ar$^+$, 10 keV, Strom 3,6 x 10$^{-8}$ A, Strahldurchmesser 0,75 mm). In Fig. 1 sind die Ionenintensitätenverhältnisse B$^+$/Si$^+$ normiert auf Si$^+$ in Abhängigkeit von der Zeit aufgetragen. Für das Gemisch ergibt sich ein nahezu linearer Verlauf (Kurve A in Fig. 1), d. h. keine Oberflächenbelegung der SiC-Teilchen durch das Additiv.

Das Gemisch wird als Eichstandard für weitere Messungen herangezogen.

An dem in Beispiel 2 hergestellten mit Boran-Pyridin dotierten und bei 1000°C in Argonatmosphäre getemperten SiC-Pulver werden, nachdem 0,25 g des Pulvers mit 0,75 g Silber-Pulver vermischt wurden, Tiefenprofilmessungen mit SIMS (Primärionen Ar$^+$, 10 keV, Strom 3,6 x 10$^{-8}$ A bei einem Strahldurchmesser von 0,75 mm) durchgeführt.

Aus den gemessenen Ionenintensitäten ergeben sich folgende Konzentrationen (Angaben in Gew.-%):

bei t = 0 min (Kornoberfläche)

cBN = 2,6 %; cSiC = 97,4 %

bei t = 60 min (Korninneres)

cBN = 0,5 %; cSiC = 99,5 %

Der Oberflächenanreicherungsfaktor nimmt den Wert

$$K = \frac{\frac{2,6}{97,4}}{\frac{0,5}{99,5}} = 5,3 \text{ an.}$$

Die Ionenintensitätenverhältnisse B$^+$/Si$^+$ normiert auf Si$^+$ sind in Fig. 1 in Abhängigkeit von der Zeit aufgetragen, Kurve B. Der Kurvenverlauf des erfindungsgemäßen mit Bornitrid und Kohlenstoff beschichteten Pulvers zeigt eine deutliche Intensitätsabnahme der $B^+$-Ionen in Abhängigkeit von der Zeit und somit eine Oberflächenbedeckung der SiC-Einzelteilchen.

Beispiel 4

In einem Quarzkolben mit Hahn wurden 5,64 g Piperazin-Boran, $BH_3$ x $C_4H_{10}H_2$ unter stehendem Argon mit einer Aufheizrate von 5 K/min auf 1000°C erhitzt und 15 Minuten bei dieser Temperatur gehalten. Für weitere 45 Minuten wurde während der Temperung ein Vakuum mit einem Druck von kleiner 5 Pascal angelegt.

Das silbrig-schwarze Pyrolysat entsteht mit einer 50 gew.-%igen Ausbeute (bezogen auf eingesetztes Piperazin-Boran).

Es besitzt folgende elementaranalytische Zusammensetzung:
B: 22,4 Gew.-%
N: 28,0 Gew.-%
C: 47,0 Gew.-%
O: 1,7 Gew.-%
Das molare B/N-Verhältnis beträgt 1,04.

Das IR-Spektrum des Pyrolysats ist vergleichbar mit dem in Beispiel 1 mit Absorptionsbanden bei 765 und 1380 $cm^{-1}$.

**Patentansprüche**

1. Für die Herstellung von SiC-Sinterkeramik geeignetes SiC-Pulver mit oberflächlich aufgetragenen Verbindungen, dadurch gekennzeichnet, daß die Verbindungen Bornitrid und Kohlenstoff sind und als homogene Beschichtung auf der Oberfläche der SiC-Einzelteilchen vorliegen.

2. SiC-Pulver gemäß Anspruch 1, dadurch gekennzeichnet, daß die homogene Schicht eine Dicke von 0,5 bis 40 nm, bevorzugt 0,5 bis 15 nm beträgt.

3. SiC-Pulver gemäß einem der Ansprüche 1 oder 2, dadurch gekennzeichnet, daß der Gehalt an Bor 0,1 bis 4 Gew.-%, an Stickstoff 0,1 bis 4 Gew.-% und an freiem Kohlenstoff 0,5 bis 5 Gew.-% beträgt.

4. SiC-Pulver gemäß Anspruch 3, dadurch gekennzeichnet, daß der Gehalt an Bor 0,1 bis 1 Gew.-%, an Stickstoff 0,1 bis 1 Gew.-% und an freiem Kohlenstoff 0,5 bis 4 Gew.-% beträgt.

5. SiC-Pulver gemäß einem oder mehreren der Ansprüche 1 bis 4, dadurch erhältlich, daß SiC-Pulver mit einer Beschichtung von thermisch zu Bornitrid und Kohlenstoff zersetzbaren Verbindung in einer thermischen Behandlung bei 100 bis 1200°C pyrolisiert werden.

6. SiC-pulver nach Anspruch 5, dadurch gekennzeichnet, daß es sich bei den zersetzbaren Verbindungen um ein Addukt oder Addukte aus einer borhaltigen Lewis-Säure mit einem aromatischen oder aliphatischen Amin oder einem stickstoffhaltigen Aromaten handelt.

7. SiC-Pulver gemäß der Ansprüch 5 oder 6, dadurch gekennzeichnet, daß es sich bei den zersetzbaren Verbindungen um ein Addukt oder Addukte von Boran mit Methyl-, Dimethyl-, Trimethyl-, Ethyl-, Diethyl-, Triethylamin oder Piperidin handelt.

8. SiC-Pulver Anspruch 5, dadurch gekennzeichnet, daß die zersetzbare Verbindung Boran-Pyridin ist.

9. Verfahren zur Herstellung der SiC-Pulver gemäß einem oder mehreren Ansprüche 5 bis 8, dadurch gekennzeichnet, daß die zersetzbaren Verbindungen in einer Suspension von SiC mit einem organischen, aus Kohlenwasserstoff oder Chlorkohlenwasserstoff bestehenden Lösungsmittel, bevorzugt Diethylether, Benzol, Toluol, Diglycoldimethylether, Dioxan, Methylenchlorid oder Tetrahydrofuran, gelöst, das Lösungsmittel im Vakuum oder bei Normaldruck unter Inertgas entfernt und der Rückstand thermisch zu Bornitrid und Kohlenstoff zersetzt wird.

10. Verfahren gemäß der Anspruch 9, dadurch gekennzeichnet, daß das Lösungsmittel durch Sprühtrocknung oder Gefriertrocknung unter Inertgasatmosphäre entfernt wird.

**11.** Verfahren gemäß Anspruch 9 oder 10, dadurch gekennzeichnet, daß der Rückstand in einer thermischen Behandlung bei 100 bis 1200°C für 0,2 bis 10 Stunden in einer inerten Atmosphäre pyrolisiert wird.

**12.** Verwendung von SiC-Pulver gemäß einem oder mehreren der Ansprüche 1 bis 8 zur Herstellung von SiC-Sinterformkörpern.

## Claims

**1.** An SiC powder suitable for the production of SiC sintered ceramics with a surface coating of compounds, characterized in that the compounds are boron nitride and carbon and are present in the form of a homogeneous coating on the surface of the individual SiC particles.

**2.** An SiC powder as claimed in claim 1, characterized in that the homogeneous layer has a thickness of 0.5 to 40 nm and preferably 0.5 to 15 nm.

**3.** An SiC powder as claimed in claim 1 or 2, characterized in that the boron content is from 0.1 to 4% by weight, the nitrogen content from 0.1 to 4% by weight and the free carbon content from 0.5 to 5% by weight.

**4.** An SiC powder as claimed in claim 3, characterized in that the boron content is from 0.1 to 1% by weight, the nitrogen content from 0.1 to 1% by weight and the free carbon content from 0. 5 to 4% by weight.

**5.** As SiC powder as claimed in one or more of claims 1 to 4 obtainable by pyrolysis of SiC powder coated with compounds thermally decomposable to boron nitride and carbon in a heat treatment carried out at 100 to 1,200°C.

**6.** An SiC powder as claimed in claim 5, characterized in that the decomposable compounds are an adduct or adducts of a boron-containing Lewis acid with an aromatic or aliphatic amine or a nitrogen-containing aromatic compound.

**7.** An SiC powder as claimed in claim 5 or 6, characterized in that the decomposable compounds are an adduct or adducts of borane with methyl, dimethyl, trimethyl, ethyl, diethyl, triethyl amine or piperidine.

**8.** An SiC powder as claimed in claim 5, characterized in that the decomposable compound is borane-pyridine.

**9.** A process for the production of the SiC powder claimed in one or more of claims 5 to 8, characterized in that the decomposable compounds are dissolved in a suspension of SiC containing an organic hydrocarbon or chlorinated hydrocarbon solvent, preferably diethyl ether, benzene, toluene, diglycol dimethyl ether, dioxane, methylene chloride or tetrahydrofuran, the solvent is removed **in vacuo** or under normal pressure in an inert gas atmosphere and the residue is isolated, optionally after heat treatment.

**10.** A process as claimed in claim 9, characterized in that the solvent is removed by spray drying or freeze drying in an inert gas atmosphere.

**11.** A process as claimed in claim 9 or 10, characterized in that the residue is pyrolyzed in a heat treatment carried out for 0.2 to 10 hours at 100 to 1,200°C in an inert atmosphere.

**12.** The use of the SiC powder claimed in one or more of claims 1 to 8 for the production of sintered ceramic compacts of SiC

## Revendications

**1.** Poudre de SiC comportant des composés déposés en surface, convenant à la fabrication de céramique frittée en SiC, caractérisée en ce que les composés sont du nitrure de bore et du carbone et se présentent sous la forme d'un revêtement homogène à la surface des différentes particules de SiC.

**2.** Poudre de SiC selon la revendication 1, caractérisée en ce que la couche homogène a une épaisseur de 0,5 à 40 nm, de préférence de 0,5 à 15 nm.

3. Poudre de SiC selon l'une des revendications 1 ou 2, caractérisée en ce que la teneur en bore est comprise entre 0,1 et 4% en poids, la teneur en azote entre 0,1 et 4% en poids et la teneur en carbone libre entre 0,5 et 5% en poids.

4. Poudre de SiC selon la revendication 3, caractérisée en ce que la teneur en bore est comprise entre 0,1 et 1% en poids, la teneur en azote entre 0,1 et 1% en poids et la teneur en carbone libre entre 0,5 et 4% en poids.

5. Poudre de SiC selon une ou plusieurs des revendications 1 à 4, que l'on peut obtenir en pyrolisant de la poudre de SiC comportant un revêtement en un composé décomposable thermiquement en nitrure de bore et carbone au cours d'un traitement thermique entre 100 et 1 200°C.

6. Poudre de SiC selon la revendication 5, caractérisée en ce que les composés décomposables sont un produit ou des produits d'addition composés d'un acide de Lewis contenant du bore et d'une amine aromatique ou aliphatique ou d'un produit aromatique contenant de l'azote.

7. Poudre de SiC selon la revendication 5 ou 6, caractérisée en ce que les composés décomposables sont un produit ou des produits d'addition de borane et de méthylamine, diméthylamine, triméthylamine, éthylamine, diéthylamine, triéthylamine ou pipéridine.

8. Poudre de SiC selon la revendication 5, caractérisée en ce que le composé décomposable est du borane-pyridine.

9. Procédé de fabrication de la poudre de SiC selon une ou plusieurs des revendications 5 à 8, caractérisé en ce que les composés décomposables sont dissous dans une suspension de SiC à l'aide d'un solvant organique, composé d'hydrocarbure ou d'hydrocarbure chloré, de préférence éther diéthylique, benzène, toluène, éther diméthylique du diglycol, dioxane, chlorure de méthylène ou tétrahydrofuranne, que le solvant est séparé sous vide ou à la pression normale sous un gaz inerte et que le résidu est décomposé thermiquement en nitrure de bore et carbone.

10. Procédé selon la revendication 9, caractérisé en ce que le solvant est séparé par séchage par pulvérisation ou séchage par lyophilisation sous une atmosphère gazeux inerte.

11. Procédé selon la revendication 9 ou 10, caractérisé en ce que le résidu est pyrolisé au cours d'un traitement thermique entre 100 et 1 200°C pendant 0,2 à 10 h dans une atmosphère inerte.

12. Emploi de la poudre de SiC selon une ou plusieurs des revendications 1 à 8, pour fabriquer des corps frittés en SiC.

I normiert auf m/e 28

FIG. 1